# EUROPEAN PATENT SPECIFICATION

(11) **EP 0 361 512 B1**
(45) Date of publication and mention of the grant of the patent: **08.05.1996**
(21) Application number: 89118064.8
(22) Date of filing: 29.09.1989
(51) Int. Cl.: G02B 7/28

(54) **Autofocusing system for a camera**
Automatisches Fokussierungssystem für eine Kamera
Système de mise au point automatique d'une caméra

(30) Priority: 29.09.1988 JP 245683/88; 29.09.1988 JP 245684/88
(43) Date of publication of application: 04.04.1990
(73) Proprietor: ASAHI KOGAKU KOGYO KABUSHIKI KAISHA, Tokyo 174 (JP)
(72) Inventor: Suzuki, Noboru, 2-36-9, Maeno-cho Itabashi-ku Tokyo (JP); Toji, Shigeo, Edogawa-ku Tokyo (JP); Kawasaki, Masahiro, 2-36-9, Maeno-cho Itabashi-ku Tokyo (JP)
(74) Representative: Schaumburg, Thoenes & Thurn

(56) References cited:
- US-A- 4 717 933
- PATENT ABSTRACTS OF JAPAN, vol. 11, no. 68 (P-553)[2515], 28th February 1987; & JP-A-61 230 111
- BJP - BRITISH JOURNAL OF PHOTOGRAPHY, vol. 135, no. 6657, 10th March 1988, page 21, London, GB; P. WEST: "Novel construction for autofocus video zoom lens from Minolta"

## Description

The present invention relates to an autofocusing system for a camera having a power zoom lens.

With the progress of electronic technology, there have recently developed varieties of automatic focusing cameras equipped with a power zoom lens whose zooming lens group is driven by a drive means such as a motor.

Some autofocusing systems of the sort mentioned above have a so-called focus-lock function in which if a photometric switch is actuated after an in-focus state is established by means of the autofocusing system, the operation of the autofocusing system can be suspended until the suspension of the operation is released for the convenience of allowing a photographer to determine a composition in the finder.

With a zoom lens mounted in the camera equipped with the autofocusing system having such a focus-lock function, however, it is generally desired that zooming may be executed even in the aforementioned focus-lock state.

On the other hand, the zooming lens group is designed to form an image of an object on a film at all times if it is in a zooming zone. Nevertheless, the zooming operation, when performed, may cause a deviation, depending on the zooming lens group, from the proper image-forming position for reasons of process of manufacture and so on.

For the reason set forth above, the in-focus state is not always maintainable when the zoom lens in the in-focus state brought about by the autofocusing system is moved. If a picture is taken in that condition, blurring in the image may occur.

It is therefore an object of the invention to provide an autofocus device for a camera capable of preventing a picture out of focus from being taken even though zooming is executed after an in-focus state has been established.

For the above purpose, according to the present invention, there is provided an autofocus device having the features given in the main claim. Advantageous further developments are described in the dependent claims.

The term "defocus information" represents an amount and a direction of defocusing of a photographic lens with respect to an ideal focal plane. The term "defocus amount dx" used hereinafter corresponds to the above "defocus information" and accordingly "defocus amount dx" can be either of positive and negative values.

Optionally, said focus-drive means comprises a pulse motor; and wherein said focus correction amount comprises the number of pulses, by which said pulse motor is operated.

Further optionally, said camera comprises a camera body and a lens unit interchangeably mounted to said camera body, and said memory means comprises a read-only-memory installed in said lens unit for storing data inherent to said lens unit.

The invention will now be described with reference to the drawings wherein:
Fig. 1 shows a block diagram illustrating a camera configuration as a whole;
Fig. 2 shows a circuit diagram in the camera body;
Fig. 3 shows a circuit diagram in the lens unit;
Fig. 4 shows a subroutine for processing a power zoom drive check;
Fig. 5 shows a main flowchart for automatic focusing;
Fig. 6 shows an initializing subroutine;
Fig. 7 shows a subroutine for driving a focusing lens group in the direction of the Wide end of the macro zone;
Fig. 8 shows a subroutine for driving a zooming lens group in the direction of the Tele end of the macro zone;
Fig. 9 shows a subroutine for stopping the zooming lens group;
Fig. 10 shows a subroutine for driving the focusing lens group in the direction of the Near end;
Fig. 11 shows a subroutine for driving the focusing lens group in the direction of the Far end;
Fig. 12 shows an AF end-point processing subroutine;
Fig. 13 shows an AF drive stop subroutine;
Fig. 14 shows an AF stop subroutine; and
Fig. 15 shows the subroutine of Fig. 4, modified according to the invention;
Fig. 16 through 19 show subroutines B, I, M, K of Fig. 5.

Referring to the accompanying drawings, a description will subsequently be given of an embodiment of the present invention applied to an automatic single-lens reflex camera. The present invention is also applicable to a compact camera with a lens unit incorporated in its camera body and to a still video camera or the like.

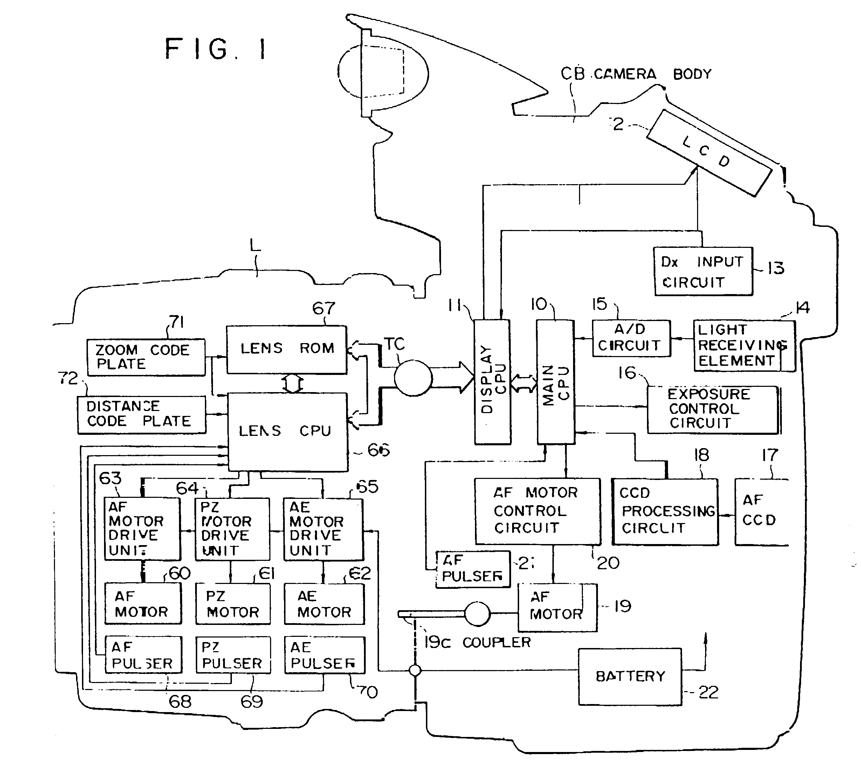

A camera body CB of the automatic single-lens reflex camera has a known construction in that it may be fitted with various kinds of photographic lenses interchangeably as illustrated in Fig. 1, and a power zoom type photographic lens L is mounted in the camera body CB.

Fig. 1 is a block diagram of a system which combines a photographic lens L with a camera body CB.

The camera body CB is equipped with two CPUs: a main CPU 10 for processing various kinds of photographic data; and a display CPU 11 for receiving data mainly via switches, transmitting and receiving data to and from the photographic lens L, and displaying the data.

With these CPUs as the main components, the camera body CB further comprises an LCD panel 12 for displaying various kinds of data, a DX code input circuit 13 for receiving the ISO (International Standard Organization) sensitivity of a film for use based on the DX code printed on a film cassette, a light receiving element 14 for measuring the luminance of an object by luminous flux incident via the photographic lens L, an A/D (Analog/ Digital) converter 15 for subjecting the output of the light receiving element to A/D conversion, an exposure control circuit 16 for controlling a shutter on the basis of various photographic conditions given, an AF CCD 17 for receiving an optical image of the object formed by the luminous flux incident via the photographic lens L, and a CCD processing circuit 18 for detecting the in-focus state of the photographic lens L from the output of the AF CCD 17.

An automatic focusing (AF) motor 19 for focusing the photographic lens, together with an AF motor control circuit 20 for driving the AF motor 19 by computing the output of the CCD processing circuit 18 and an AF pulser 21 for detecting the drive amount of 10 the AF motor 19, is used for transmitting the driving force to the photographic lens L via a coupler 19a provided at a mount port when the photographic lens L of a conventional type without an AF motor is mounted.

however, the AF motor 19 is not used in the case shown in Fig. 1.

A battery 22 is designed to supply power to motors, which will be described later, within the photographic lens L and a CPU in addition to each active element in the camera body CB.

The photographic lens L incorporates three motors: an AF motor 60, a power zoom (PZ) motor 61 and an automatic exposure (AE) control motor 62, whereby the driving force within the lens is available for automatic focusing, power zooming and exposure control.

The photographic lens L has cam mechanisms for focusing and zooming by means of cam rings which move each of the lens groups relative to the optical axis, the aforementioned AF motor 60 and the PZ motor 61 being used for driving the cam rings.

These motors are controlled by a lens CPU 66 via an AF motor drive unit 63, a PZ motor drive unit 64 and an AE motor drive unit 65, respectively.

A data input means for the lens CPU 66 comprises a lens ROM 67 as a means for storing data inherent in the lens; an AF pulser 68, a PZ pulser 69 and an AE pulser 70 for detecting the drive amounts of the respective motors in the form of pulses; a zoom code plate 71 and a distance code plate 72 for detecting the respective revolved positions of the zooming and focusing cam rings.

Incidentally, the code plate actually consists of the code plate secured to the cam ring and a plurality of brushes slidably in contact with the code plate fitted to a fixed ring and arranged so that the absolute revolved position of each cam ring is detected from a state in which the brushes come into contact therewith. However, the term "code plate" is used as a general term given to these parts as a whole for convenience.

The lens CPU 66 is coupled to the control subjects and the input means and also capable of communicating with the camera body CB via groups of electric contacts TC as will be described later; e.g. it functions as means for computing the aforesaid drive amount while referring to the data stored in the lens ROM 67 upon receipt of the defocus amount detected on the camera body CB side, for driving the AF motor 60 while detecting the drive amount using the AF pulser 68, and for driving the AE motor 62 to rotate while detecting the drive amount using the AE pulser 70 on the basis of the exposure value determined on the camera body CB side.

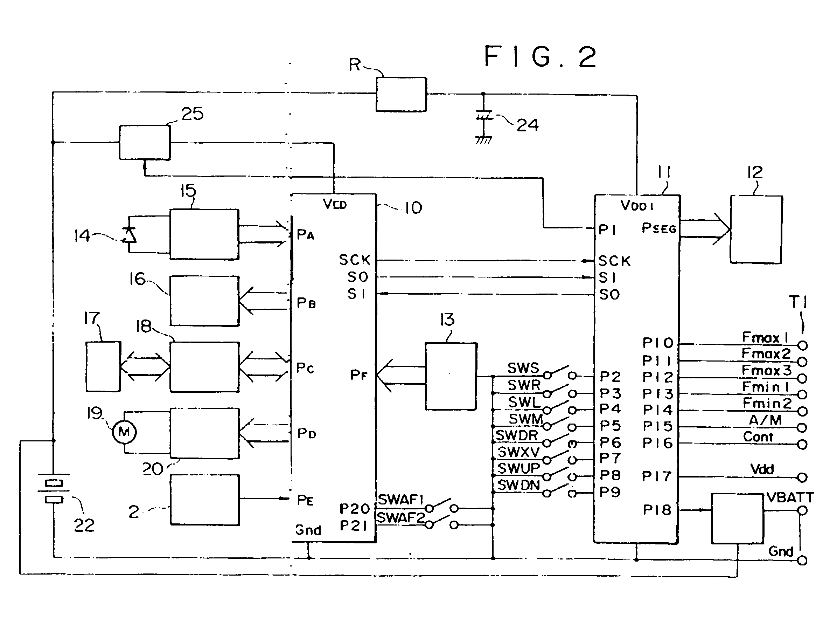

A group T1 of 10 electric contacts is provided at the lens mount port of the camera body CB in such a state that these contacts are insulated from the surface of the mounting ring of the body (see Fig.2).

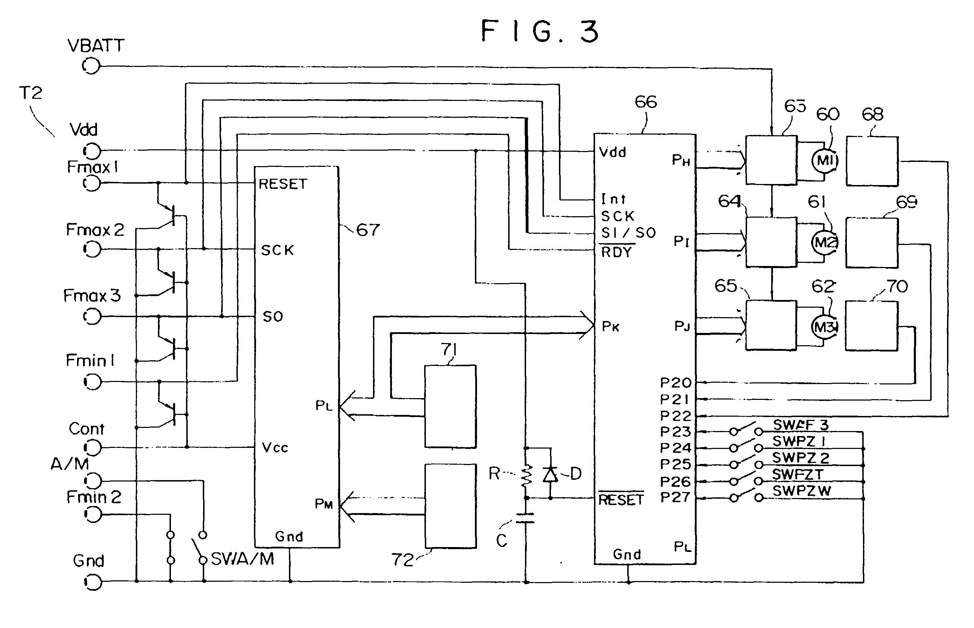

On the other hand, a group T2 of electric contacts corresponding to the group T1 of electric contacts provided on the camera body CB side is provided in the mount portion of the photographic lens L (Fig. 3).

When the photographic lens L is mounted in the camera body CB, these groups T1,T2 of electric contacts, make contact with their respective counterparts to form the aforementioned groups TC of electric contacts.

Referring to detailed circuit diagrams, this system will be described further.

Fig. 2 shows a circuit diagram in the camera body CB.

The voltage of the battery 22 is applied, after being transformed by a regulator R and backed up by a super capacitor 24, to a terminal VDD1 of the display CPU 11, which is always operated at constant voltage.

Moreover, a terminal P1 of the display CUP 11 is connected to a DC/DC converter 25 for turning on /off the power supply of the main CPU 10; a terminal P2 to a photometric switch SWS is turned on when a shutter button is depressed by one step; a terminal P3 to a release switch SWR is turned on when the shutter button is depressed by a steps; and a terminal P4 to a lock switch SWL is turned on when the camera is set to a photographic condition. The data from each switch is thus supplied to the display CPU 11.

The photometric switch SWS falls under a focus-lock switch recited in the present invention and each lens group is held in the in-focus state until it is released therefrom to effect focus-lock by turning on the photometric switch SWS during the automatic focusing process in the power-zooming and focus priority modes.

The DC/DC converter 25 supplies power to a terminal VDD of the main CPU 10 to operate it when the photometric switch SWS is turned on while the lock switch SWL is held on.

A terminal P5 of the display CPU 11 is connected to a mode switch SWM for selecting from among program, auto and manual photographic modes; a terminal P6 to a drive switch SWDR for selecting either a single shot or sequential-shots modes while the switch SWDR is held on; and a terminal P7 to an exposure correction switch SWXV for correcting the set exposure while the switch SWXV is held on. Each setting can be altered by operating an up-count switch SWUP connected to a terminal P8 or a down-count switch SWDN connected to a terminal P9 while the switches connected to the terminals P5 - P7 are held on.

A group of terminals PSEG are used for driving the LCD panel 12 to display stored data when the lock switch SWL is turned on.

A group of contacts PA of the main CPU 10 are connected to a photometric A/D circuit 15; a group of contacts PB to an exposure circuit 16; a group of contacts PC to the CCD processing circuit 18; a group of contacts PD to the AF motor control circuit 20; a group of contacts PE to the AF pulser 21; and a group of contacts PF to the DX code input circuit 13.

As set forth above, the A/D circuit 15 is connected to the photometric light receiving element 14; the CCD processing circuit 18 to the AF CCD 17; and the AF motor control circuit 20 to the AF motor 19 within the camera body CB.

A terminal P20 of the main CPU 10 is connected to a first autofocusing switch SWAF1 for switching an auto mode wherein focusing is effected by driving the AF motor to a manual mode wherein focusing is effected manually and vice versa, whereas a terminal P21 is connected to a second autofocusing switch SWAF2 for switching priority given to focusing to what is given to releasing in a shutter release mode.

Fig. 3 shows a circuit diagram in the photographic lens L.

A contact VBATT on the lens side is connected to each of the motor drive units 63, 64, 65, and power is directly supplied from the battery 22 in the camera body CB to each of the motors 60, 61, 62 by switching the drive units one after another.

The motor drive units 63, 64, 65 are connected to groups of terminals PII, PI, PJ of the lens CPU 66 and controlled thereby, respectively. The pulsers 68, 69, 70 are connected to terminals P20 - P22 and used to deliver the drive amounts of the respective motors to the lens CPU 66.

A contact Vdd is used to supply power supplied from the display CPU 11 on the camera body CB side to a terminal Vdd of the lens CPU 66 and to a reset circuit comprising a resistor R, a diode D and a capacitor C.

The resistor R and the capacitor C allow the reset circuit to have a fixed time constant, and the reset circuit has the function of having the program fed to the lens CPU 66 started by a switching terminal $\overline{\text{RESET}}$ of the lens CPU 66 from an active (L) to a nonactive state (H) when the power supply voltage is stabilized with in a predetermined time after the actuation of Vdd.

Terminals P23 - P27 of the lens CPU 66 are connected to a third autofocusing switch SWAF3 for auto-to-manual switching of the autofocusing device provided on the lens side, a zoom changeover switch SWPZ1 for selection of zooming effected automatically by means of the motor or what is effected manually, a constant magnification switch SWPZ2 for effecting zooming automatically in company with the movement of the lens relative to the object so as to hold a magnification, a zoom switch SWPZT on the Tele side for driving the PZ motor 69 in such a manner as to move the photographic lens L in a direction in which its focal length is prolonged, and a zoom switch SWPZW on the Wide side for driving the PZ motor in such a manner as to move the photographic lens L in a direction in which its focal length is shortened.

The lens CPU 66 is equipped with a terminal INT for receiving an electric signal which is applied to interrupt the program being executed by the CPU, a terminal SCK for receiving a serial clock from the display CPU 11 on the camera body CB side, a terminal SI/SO for serially transferring data, and a terminal $\overline{\text{RDY}}$ for synchronizing serial communication of the lens CPU 66 with peripheral equipment.

The terminal INT allows the lens CPU 66 to be interrupted at L→ H after $\overline{\text{RESET}}$, whereas the terminal $\overline{\text{RDY}}$ makes the display CPU 11 on the camera body CB side remain on standby to prevent it from executing the serial communication at H and permits it to carry on the serial communication at L.

Like the groups of terminals PL, PM of the lens ROM 67, a group PK of terminals of the lens CPU 66 is connected to the zoom code plate 71 and the distance code plate 72 and receives focal length data and distance data corresponding to the actual state of the lens.

The lens ROM 67 stores data inherent in the photographic lens L; e.g. fixed data concerning f-number at open aperture, f-number at minimum open aperture, the amount of change of f-number by zooming, and variable data.

The data stored in the lens ROM 67 is under the control of the lens CPU 66 or transferred via the groups TC electric contacts to the CPU in the camera body CB in compliance with a direct request from the CPU in the camera body CB.

With this arrangement, automatic focusing is effected as follows in the camera system having the aforementioned functions when the zooming lens group is driven by the zoom switch SWPZT on the Tele side or zoom switch SWPZW on the Wide side while the in-focus state has been established with the first autofocusing switch SWAF1 held on, the focus priority mode selected by the second autofocusing switch SWAF2 and the power-zooming mode selected by the zoom changeover switch SWPZ1.

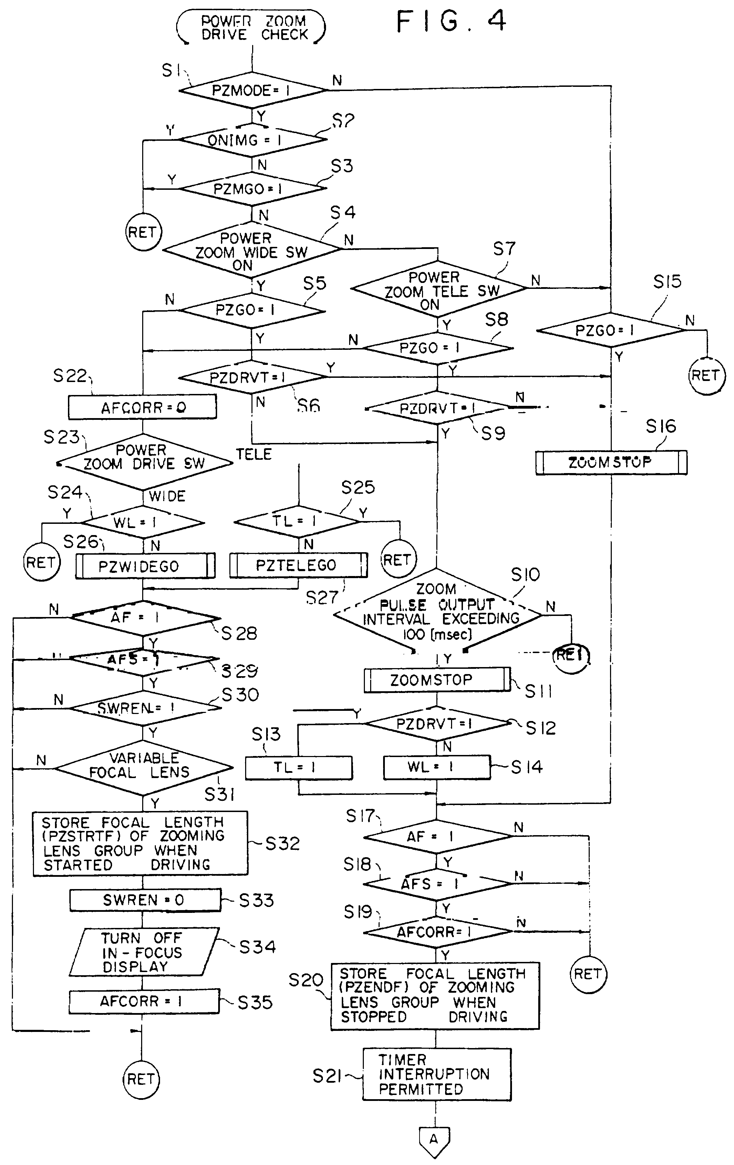

Flowcharts shown in Figs. 4 - 14 will subsequently be described.

Referring to Fig. 4, first a flowchart concerning a power zoom drive check will be described.

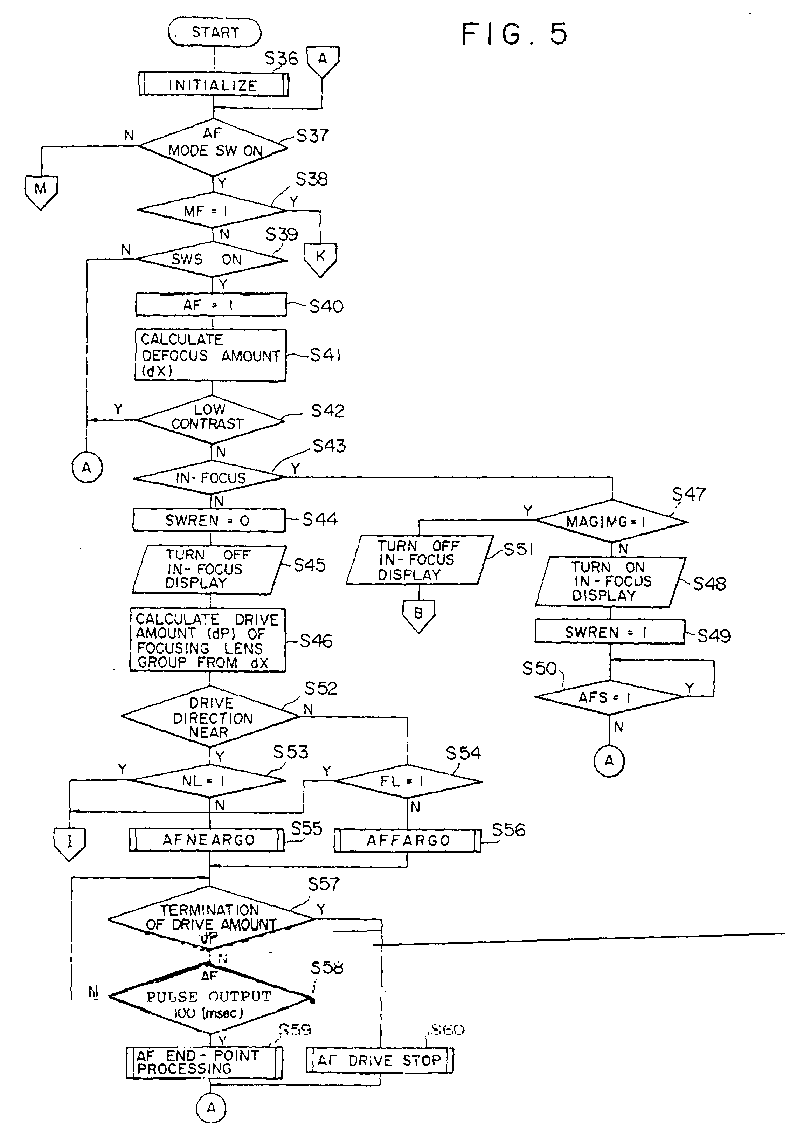

The following program is executed in a manner similar to a release process during timer interruption of execution of a main autofocusing (AF) processing (Fig. 5), as will be described later, which is started when power is supplied from the DC/DC converter 25 when the photometric switch SWS is turned on while the lock switch SWL is held on. The flow of the program returns to AF processing (Fig. 5) to effect automatic focusing after the following power zoom drive check is processed and then the release process is performed during the timer interruption.

With respect to the power zoom drive check process, a decision is made in Step 1 on whether the power zoom mode has been set up. If YES, i.e. if the power zoom mode has been set up, a decision is made on whether constant image magnification control is being exercised and another decision is made on whether an AF power zoom drive in the macro zone is taken, in Steps 2 and 3, respectively.

If YES in Steps 2 or 3, the flow returns since this flowchart is not intended to show the process in which the program works in this case. If NO, a decision is made on whether the zoom switch SWPZW on the wide side is ON.

When the zoom switch SWPZW on the Wide side is determined to be ON, a decision is made in Step 5 on whether the zooming lens group is being driven. If YES, a decision is made on whether the drive direction of the zooming lens group is pointed to Tele in Step 6.

If the zoom switch on the Wide side is determined to be OFF in Step 4, on the other hand, the decisions similar to those made in Steps 4 through 6 are given to the zoom switch SWPZT on the Tele side in Step 7 through 9.

If any one of the power zoom switches has been turned on and if the zooming lens group is being driven in the direction conforming to the power zoom switch thus turned on in Steps 4 through 6 and Steps 7 through 9, a decision is made in Step 10 on whether the pulse of the PZ pulser 69 is output at intervals exceeding 100 msec.

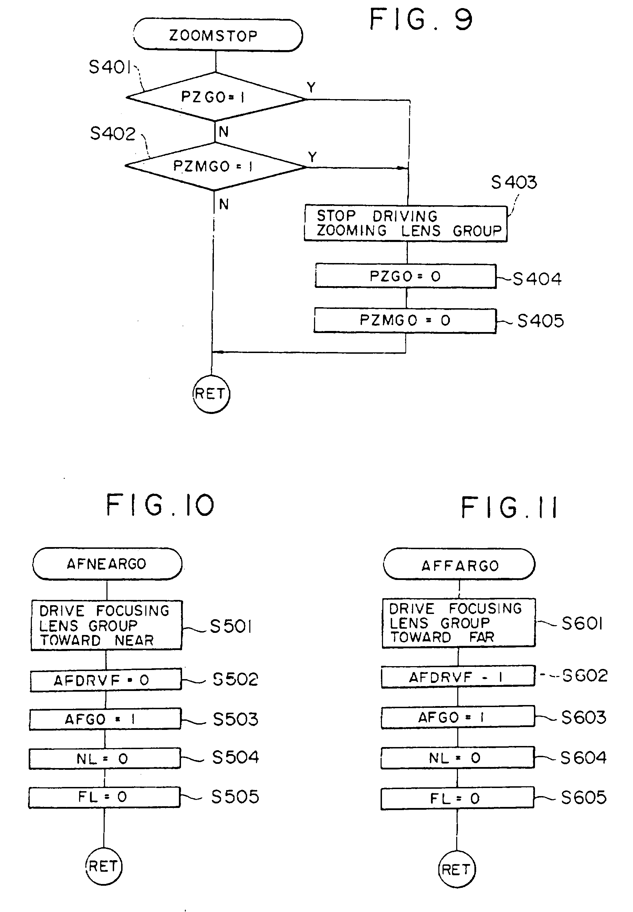

If the output interval is not longer than 100 msec, the flow returns because the zooming lens group is being driven, whereas if it exceeds 100 msec, a zoom stop subroutine (Fig. 9) is executed in Step 11 because the zooming lens group ought to have reached the end point. A decision is then made in step 12 whether the zooming lens group is being driven in the direction of Tele end . If YES, a flag representing the position of the zooming lens group at the Tele end is set in Step 13, whereas if NO, a flag representing the position thereof at the Wide end is set in Step 14. Step 17 then follows.

If NO, i.e. the power zoom mode has not yet been set up in Step 1, Step 15 like Steps 4 and 7 in which both power zoom switches at the Tele and Wide ends are held off follows. A decision is then made in Step 15 whether the power zoom switch is actuated in Step 15. If NO, the flow returns, whereas if YES, Step 17 follows after the zoom stop routine (Fig. 9) is executed in Step 16.

Steps 13, 14, 16 are followed by Steps 17 - 19 wherein decisions are made respectively on whether autofocusing (AF) is being executed, whether the focus priority mode has been set up, and whether AF correction is being executed, in order. If YES in all of these steps, the focal length (PZENDF) at the time the zooming lens group stops is stored in Step 20 and timer interruption is permitted in Step 21. The AF flowchart shownin Fig. 5 then follows via A, wherein automatic focusing is again executed as will be described later and corrections required by the power zoom drive are made.

If NO, i.e. the power zoom drive is not carried on in Steps 5 and 8, a flag representing AF correction caused by the power zoom drive of the zooming lens group is set to 0 in Step 22, and a decision is made in Step 23 whether the power zoom drive switch is on the Tele or the Wide side. In other words, a decision is made on which one of the zoom switches, SWPZT on the Tele side and SWPZW on the Wide side, has been turned on.

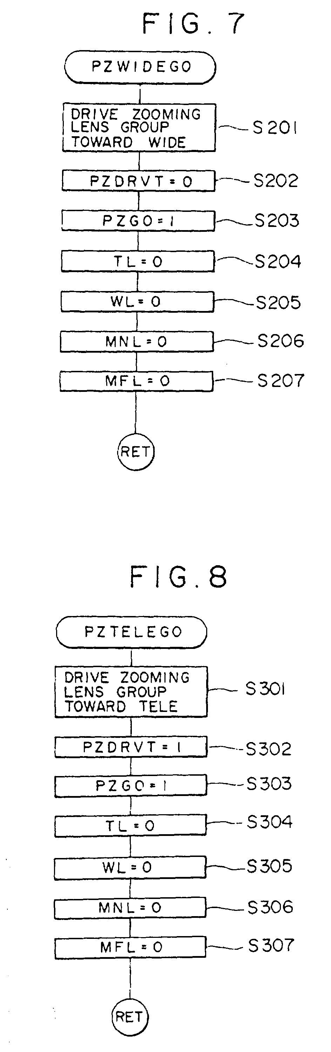

If the zoom switch on the Wide side has been turned on, a decision is made in Step 24 whether the zooming lens group is located at the Wide end, whereas if the zoom switch on the Tele side has been turned on, a decision is made in Step 25 whether it is located at the Tele end. If YES, the flow returns. If NO, subroutines (Figs. 7 and 8) are executed in Steps 26, 27 to drive the zooming lens group up to the end point, respectively.

Steps 26, 27 are followed by Steps 28, 29 wherein decisions are respectively made on whether AF is carried on and whether the focus priority mode has been set up, in order. In Steps 30, 31, decisions are respectively made on whether the shutter-release is permitted and whether the photographic lens is a so-called varifocal lens which causes the zoom drive to be accompanied with a change of the image-forming position, in order.

The data on whether the photographic lens is a varifocal lens is read from the discrete data stored in the lens ROM 67 and used for making such a decision.

If YES in Steps 28 - 31, the focal length (PZSTRTF) of the zooming lens group at the time it starts to be driven is stored in Step 32. In Steps 33 - 35, a flag representing the shutter-release permission is set to 0 and the in-focus display is turned off, and a flag representing the AF correction is set to 1, respectively. The flow then returns.

If NO in Steps 28 - 31, on the other hand, the following steps are skipped and the flow returns.

Referring to Fig. 5, a description will subsequently be given of a flowchart connected to A. Since this flowchart is a main flowchart concerning automatic focusing, it will be described from the start.

This program is started when power is supplied from the DC/DC converter 25 as the photometric switch SWS is turned on while the lock switch SWL is held on.

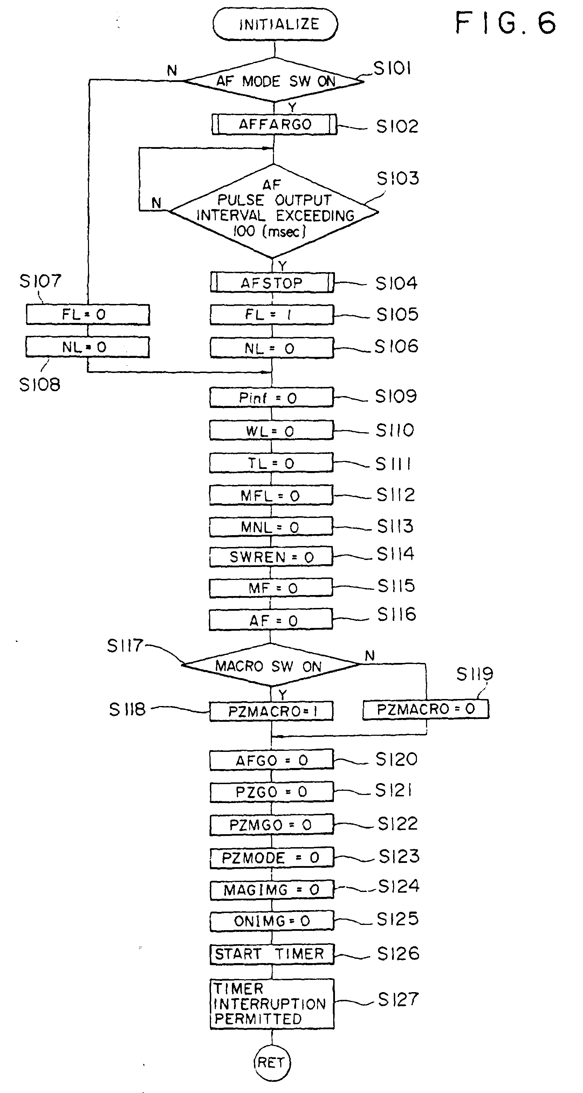

When the program is thus started, an initializing subroutine is first executed in Step 36, and Step 37 follows. The contents of the initializing subroutine will be described later with reference to Fig. 6.

In Step 37 a decision is made on whether an AF mode has been set up after the AF mode switch SWAF3 is turned on.

If the AF mode has not yet been set up, this flowchart is not executed.

Step 38 then follows provided the AF mode has been set up. In the case of a manual mode other than the AF mode, processing can only be achieved in the manual mode and therefore automatic focusing is not executed (M of Fig. 4).

In Step 38, a decision is made on whether manual focusing is being carried out.

If YES, it means the AF mode has been switched to the manual focusing and this flowchart is not executed as in the case of Step 37. Thus, the flow returns via an NG processing mode to Step 37 and enters the manual mode (K of Fig. 4).

If NO, Step 39 follows, and a decision is made on whether the photometric switch SWS is held on. If YES, a flag representing the AF mode is set in Step 40, and an AF operation starts.

If the decision is NO in Step 39, the flow returns to Step 37 because the user's intention to take pictures is not confirmable and keeps cycling through Steps 37 - 39 to wait until the photometric switch SWS is turned on.

When the AF operation starts in Step 40, the defocus amount dx detected by the AF CCD 17 is computed in Step 41, and a decision is made in Step 42 whether the contrast of the signal detected in the CCD 17 is low.

If YES, the flow returns to Step 37 because automatic focusing is hardly attainable with the present output of the CCD 17 and keeps cycling through Steps 37 - 42 to wait for the contrast to be recovered or the manual mode to be selected.

If NO, a decision is made in Step 43 on whether an in-focus state exists.

If the actual state is not the in -focus state, the decision becomes NO and Steps 44 - 46 follow. In Steps 44 -46, a flag representing the inhibition of the actuation of the release switch SWR is set; the in-focus display is turned off; and the drive amount dP of the focusing lens group is computed from the defocus amount dx.

If the actual state is judged the in-focus state in Step 43, Steps 47 - 51 follow, and a decision is made in Step 47 whether the image magnification is being controlled constantly. If NO, the in-focus display is turned on, and a flag representing the permission of the actuation of the release switch SWR is set, and Step 50 follows. Consequently, shutter-release during timer interruption becomes possible after Step 49.

If YES in Step 47, on the other hand, the in-focus display is turned off in Step 51, and a constant image magnification control mode follows (B).

In Step 50 a decision is made on whether the focus priority mode has been set up. If YES with the flow being cycled, the focus lock is implemented, whereas if the decision is NO, the flow returns to Step 37 (A).

When the drive amount dP of the focusing lens group is computed with NO decision in Step 43 as set forth above, the drive direction of the focusing lens group is determined according to the signal given by the aforementioned detector in the following step 52. A decision is then made on whether the focusing lens group is located at the Near end in Step 53 when that drive direction is to the Near side, whereas a decision is made on whether the focusing lens group is located at the Far end in Step 54 when the drive direction is to the Far side.

If YES in these steps 53, 54 the AF processing in the macro zone is started according to I.

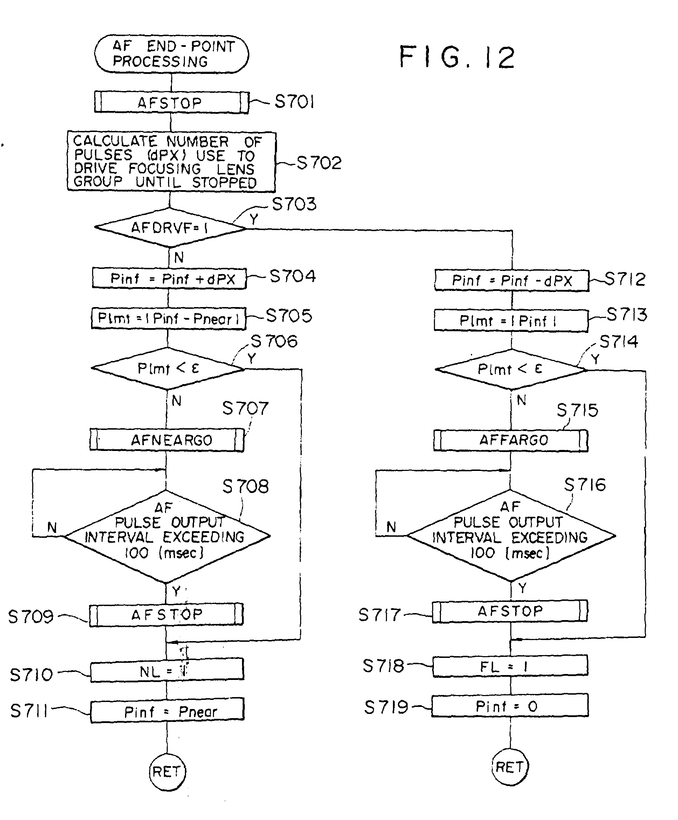

If NO in these steps 53, 54 a subroutine (Figs. 10, 11) for moving the focusing lens group to the end point on the drive direction side is executed in Step 55 or 56. Irrespective of Step 55, 56, Step 57 follows.

In Step 57 a decision is made on whether the focusing lens group has completely been driven to the extent of the drive amount dP. If NO, a decision is made in Step 58 whether the pulse of the AF pulser 68 is output at intervals exceeding 100 msec. If the output interval exceeds 100 msec, an AF end-point processing subroutine (Fig. 12) is executed in Step 59, and the flow returns to Step 37.

If the output interval is not longer than 100 msec, the flow returns to Step 57 and keeps cycling through Steps 57, 58 to wait for the completion of the drive amount dP or for the AF pulser 68 to be output at intervals of 100 msec.

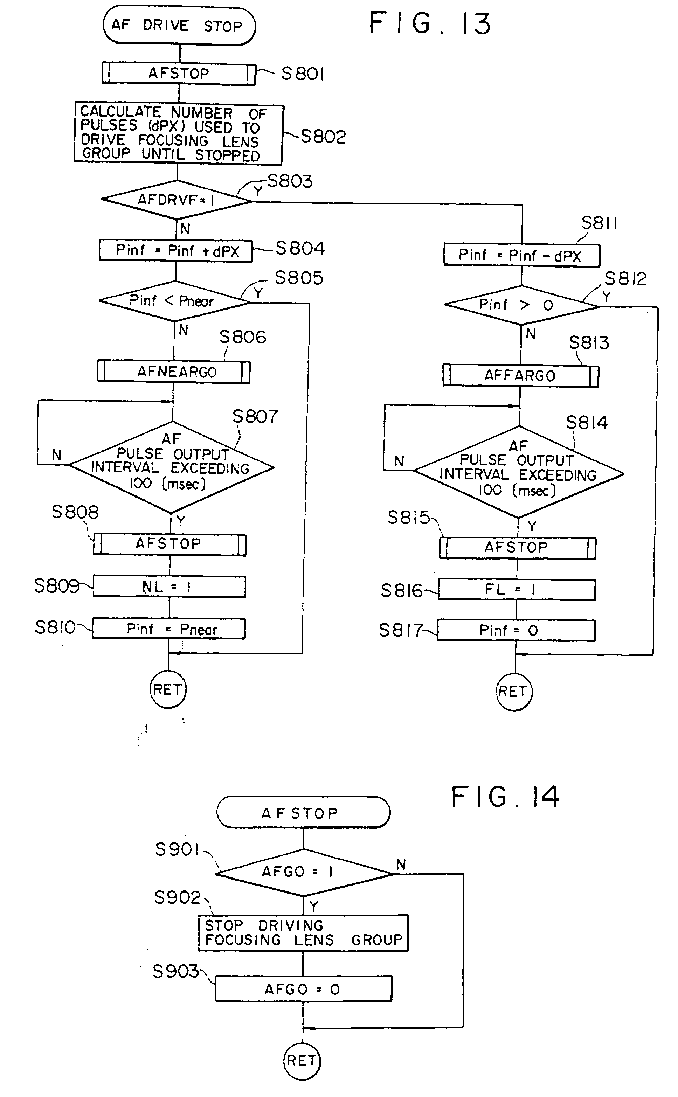

If YES in Step 57, i.e. upon termination of the driving of the focusing lens group by the drive amount dP, Step 60 follows and, after an AF drive stop subroutine (as will be described with reference to Fig. 13) is executed, the flow returns to Step 37. The shutter-release becomes possible provided the in-focus state is established in Steps 37 - 43 and in Steps 47 - 57, whereas the flow cycles through Steps 37 - 46 and Steps 52 - 62 if the in-focus state is not established.

As set forth above, the AF process shown in Fig. 5 is followed by the power zoom drive check shown in Fig. 4 by means of the timer interruption. Further, the power zoom drive check is followed by the aforementioned AF process again and, after the in-focus state is established through the AF process, the shutter-release is carried out by means of the timer interruption. Even when the zooming lens group is driven with power zooming after the in-focus state is reached through the AF process, the zooming lens group can be focused and therefore a picture out of focus is prevented.

Referring now to Figs. 6 - 14, the subroutines shown in Figs. 4 and 5 will subsequently be described.

Referring to Fig. 6, the initializing subroutine will be described.

When the initializing subroutine is initiated, a decision is first made in Step 101 on whether the AF mode switch is held on. When the switch is turned on to set up the AF mode, a subroutine for driving the focusing lens group up to the Far end is executed in Step 102 (Fig. 11).

In Step 103, a decision is made on whether the AF pulse is output at intervals exceeding 100 msec.

This is because the output interval exceeding 100 msec is considered indicative of the fact that the focusing lens group is located at the Far end.

If the output interval exceeds 100 msec, an AF stop subroutine (Fig. 14) is executed in Step 104. A flag representing the position of the focusing lens group at the Far end and another representing the absence thereof at the Near end are set in Steps 105, 106. Step 109 then follows.

When the manual mode is judged in effect in Step 101, on the other hand, flags representing the absence of the focusing lens group at the Far and Near ends are set in Steps 107, 108 respectively. Step 109 then follows.

In Step 109 the number of pulses Pinf corresponding to the distance of the focusing lens group from the Far end is set to 0. In Steps 110, 111, flags are set: one representing that the zooming lens group is not located at the Wide end and the other representing that the lens group is not located at the Tele end.

In Steps 112, 113, subsequently, flags respectively representing the absence of the focusing lens group at the Far and Near ends in the macro zone because of the annular zoom drive are set.

In Steps 114 - 116 flags respectively representing release inhibition, non-fulfillment of the manual focusing and the autofocusing are set.

In Step 117, a decision is made on the on/off state of the macroswitch.

If the macroswitch is turned on a flag PZMACRO is set to 1 in Step 118, whereas if it is turned off, the flag is set to 0 in Step 119.

In Steps 120 - 122 following Step 118 or 119, flags respectively representing the focusing lens group and the zooming lens group remaining undriven, and the zooming lens remaining undriven on an AF basis in the macro zone are set.

In Steps 123 - 125 flags respectively representing the possibility of the power zoom drive, commencement of constant control over the image magnification, and the image magnification under constant control are set to 0, whereby a 5 msec timer is started in Step 126 and allowed to be interrupted in Step 127. The flow then returns.

Referring to Fig. 7, the subroutine for driving the zooming lens group in the Wide direction will subsequently be described.

When the subroutine is initiated, the zooming lens group starts being driven in the Wide direction in Step 201. Since the zooming lens group is being driven in the Wide direction, in Step 202 a flag representing the zooming lens group being driven in the Tele direction is set to 0 and moreover a flag representing the zooming lens group being driven is set in Step 203.

In Steps 204, 205, flags respectively representing the absence of the zooming lens group at the Tele and Wide ends are set.

In Steps 206, 207, flags respectively representing the absence of the zooming lens group at the Near and Far ends in the macro zone are set. The flow then returns.

Referring to Fig. 8, the subroutine for driving the zooming lens group in the Tele direction will be described.

When this subroutine is initiated, the zooming lens group starts being driven in the Tele direction in Step 301. In Step 302, a flag representing the zooming lens group being driven in the Far direction is set to 1, whereas a flag representing the zooming lens group being driven is set in Step 303.

In Steps 304, 305, flags respectively representing the absence of the zooming lens group at the Tele and Wide ends are set.

In Steps 306, 307, flags respectively representing the absence of the zooming lens group at the Near and Far ends in the macro zone are set.

Referring to Fig. 9, the contents of the subroutine for suspending the driving of the zooming lens group will be described.

With respect to the subroutine for suspending the zooming operation, a decision is made in Steps 401, 402 whether the zooming lens group is being driven in the zooming or macro zone. If the zooming lens group is being driven in neither zone, the flow as it stands is returned.

When the zooming lens group is being driven in either zone, the zooming lens group stops in Step 403, and flags representing the zooming lens group being stopped are set in Steps 404, 405. The flow then returns.

Referring to Fig. 10, the contents of a subroutine for driving the focusing lens group towards the Near end will be described.

When the subroutine for driving the focusing lens group towards the Near end is initiated, the focusing lens group starts being driven in Step 501. Since the focusing lens group is being driven in the Near direction in Step 502, a flag representing the focusing lens group being driven in the Far direction is set to 0, and a flag representing the focusing lens group being driven is set in Step 503.

In Steps 504, 505, flags respectively representing the absence of the focusing lens group at the Near and Far ends are set in order, and the flow returns.

Referring to Fig. 11, the contents of a subroutine for driving the focusing lens group towards the Far end will subsequently be described.

When the subroutine for driving the focusing lens group towards the Far end is initiated, the focusing lens group starts being driven in Step 601. Since the focusing lens group is being driven in the Far direction, in Step 602 a flag representing the focusing lens group being driven in the Far direction is set to 1, and a flag representing the focusing lens group being driven is set in Step 603.

In Steps 604, 605, flags respectively representing the absence of the focusing lens group at the Near and Far ends are set in order, and the flow returns.

The contents of the AF end-point processing subroutine shown in Fig. 12 will subsequently be described.

When the AF end-point processing subroutine is initiated, the AF stop subroutine (Fig. 14) is executed in Step 701, and the number of pulses dPX used to drive the focusing lens group until it stops is computed in Step 702.

A decision is then made in Step 703 whether the focusing lens group has been driven in the direction of Far end. If NO, dPX calculated in Step 702 is added to the number of pulses Pinf corresponding to the delivered amount of the focusing lens group from the Far end to set up Pinf in Step 704. The absolute value of the difference between Pinf and Pnear (the number of pulses from Far to Near end) is defined as PLmt (the number of pulses up to the Near end) in Step 705. Step 706 then follows.

A decision is then made on whether Pint is smaller than ε (the number of allowable error pulses; e.g. e = 10) in Step 706. If NO, the subroutine (Fig. 10) for driving the focusing lens group towards the Near end is executed in Step 707, and a decision is made in Step 708 whether the AF pulse is output at intervals exceeding 100 msec.

If the output interval exceeds 100 msec, the AF stop subroutine (Fig. 14) of the focusing lens group is executed in Step 709. If the output interval is not greater than 100 msec, Step 708 is repeated to wait for the end point to be detected, and Step 710 follows.

If YES in Step 706, on the other hand, Steps 707 - 709 are skipped, and Step 710 follows because errors are within a predetermined range.

A flag representing the presence of the focusing lens group at the Near end is set in Step 710, and Pinf is rewritten to Pnear in Step 711 so as to eliminate the accumulation of errors. The flow then returns.

If YES in Step 703, on the other hand, dPX calculated in Step 702 is subtracted in Step 712 from the number of pulses Pinf corresponding to the delivered amount of the focusing lens group from the Far end to set up Pinf, and the absolute value of Pinf defined as PLmt (the number of pulses up to the Near end). Step 714 then follows.

In Step 714 like Step 706, a decision is made on whether Pint is smaller than ε (the number of allowable error pulses; e.g. e = 10). If NO, the subroutine (Fig. 11) for driving the focusing lens group towards the Far end is executed in Step 715, and Step 716 follows.

In Step 716, a decision is made on whether the AF pulse is output at intervals exceeding 100 msec. If the output interval exceeds 100 msec, the AF stop subroutine (Fig. 14) of the focusing lens group is executed in Step 717. If the output interval is not longer than 100 msec, Step 716 is repeated to wait for the end point to be detected, and Step 717 follows.

If YES in Step 714, on the other hand, Steps 715 - 717 are skipped, and Step 718 follows because the errors are within a predetermined range.

In Step 718, a flag representing the presence of the focusing lens group at the Far end is set, and the starting point is modified with 0 = Pinf in Step 719. The flow then returns.

Referring to Fig. 13, the contents of the AF drive stop subroutine will subsequently be described.

When the AF drive stop subroutine is initiated, the AF stop subroutine (Fig. 14) is executed in Step 8011 and the number of pulses dPX used to drive the focusing lens group until it stops is computed in Step 802. Step 803 then follows.

In Step 803, a decision is made on whether the focusing lens group has been driven towards the Far end. If NO, dPX calculated in Step 802 is added in Step 804 to the number of pulses Pinf corresponding to the delivered amount of the focusing lens group from the Far end to set up Pinf in Step 804. Step 805 then follows.

In Step 805, a decision is made on whether Pinf is smaller than Pnear (the number of pulses from Far to Near end). If YES, the flow is returned, whereas if NO, the subroutine (Fig. 10) for driving the focusing lens group towards the Near end is executed in Step 806. Step 807 then follows.

In Step 807, a decision is made on whether the AF pulse is output at intervals exceeding 100 msec and therefore whether the end point is reached. If the output interval exceeds 100 msec, the AF stop subroutine (Fig. 14) is executed in Step 808,and Step 809 follows. If it is not longer than 100 msec, Step 807 is repeated.

In Step 809, a flag representing the presence of the focusing lens group at the Near end is set and Pinf is rewritten to Pnear in Step 811. The flow then returns.

If YES in Step 803, on the other hand, dPX calculated in Step 802 is subtracted in Step 811 from the number of pulses Pinf corresponding to the delivered amount of focusing lens group from the Far end to set up Pinf, and a decision is made in Step 812 whether Pinf is positive or negative.

If YES, the flow returns. If NO, the subroutine (Fig. 11) for driving the focusing lens group towards the Far end is executed in Step 813, and Step 814 follows.

In Step 814 like Step 807, a decision is made on whether the AF pulse is output at intervals exceeding 100 msec.

If the output interval exceeds 100 msec, Step 815 follows, wherein the AF stop subroutine (Fig.14) is executed, and Step 816 follows. If it is not longer than 100 msec, Step 814 is repeated.

In Step 816, a flag representing the presence of the focusing lens group at the Far end is set, and Pinf is assumed to be 0 in Step 817. The flow then returns.

Referring to Fig. 14, the AF stop subroutine will subsequently be described.

When the AF stop subroutine is initiated, a decision is made in Step 901 whether the focusing lens group is being driven on an AF basis. If YES, Step 902 follows, whereas if NO, the flow returns.

In Step 902, the focusing lens group stops, and a flag representing the focusing lens group being stopped is set in Step 903. The flow then returns.

As set forth above, autofocusing is consequently implemented to create the in-focus state again even though zooming is performed in the focus-lock state thereafter to ensure that a picture out of focus is prevented and to increase freedom of using a zoom lens when the zoom lens is employed to determine a composition in the finder.

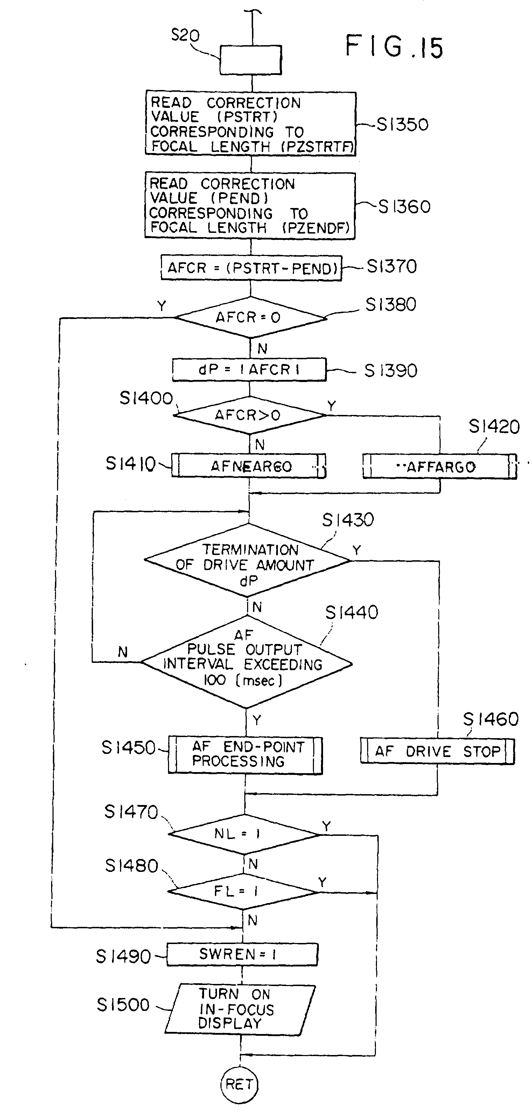

Fig. 15 shows the present invention wherein the power zoom drive check processing is modified from that illustrated in Fig. 4.

In the flow of Fig. 4, if the results of decisions in Step 17 through 19 are all YES, the flow goes to Step 37 of Fig. 5 via Step 20 and 21 for again detecting the defocus amount. In the procedure shown in Fig. 15, however, if the results of decisions in Step 17 through 19 are all YES, the flow goes to Step 1350 via Step 20.

Further it should be noted that correction data in the form of values inherent in the photographic lens is stored in the lens ROM 67 as follows:

The correction data expresses a deviation from the expected focus by the number of pulses indicative of the movement of the focusing lens group when the zooming lens group of the photographic lens L is driven to set a focal length; e.g. the number of pulses becomes what is shown in Table 1 provided the photographic lens L is a varifocal lens having a focal length of 70 -210 mm.

**Table 1.**

| Correction Data | |
|---|---|
| Focal length : | Correcting number of pulses: |
| 70 | n1 |
| 79 | n2 |
| 89 | n3 |
| 101 | n4 |
| 114 | n5 |
| 129 | n6 |
| 146 | n7 |
| 165 | n8 |
| 186 | n9 |
| 210 | n10 |

The corrected number of pulses varies with the design of lens and the method of setting any one of n1 - n10 at 0 as a standard.

The data stored in the lens ROM 67 is under the control of the lens CPU 66 or transferred via the groups TC of electric contacts to the CPU in the camera body CB in compliance with a direct request from the CPU in the camera body CB.

Turning to the flow of Fig. 15, (in Step 1350, a correction value (PSTRT) corresponding to the focal length (PZSTRTF) of the zooming lens group stored in Step 32 at the time it is started is read from the lens ROM 67 on condition that AF is being carried out, that the focus priority mode has been set up and that AF is being corrected in Steps 17 - 19.

This is intended to compute the deviated amount of the focusing lens group as the zooming lens group is driven in the following steps.

In Step 1360 likewise, a correction value (PEND) corresponding to the focal length (PZENDF) stored in Step 20 at the time it is stopped is read therefrom and (PSTRT - PEND) is computed in Step 1370 to give a focusing correction amount (AFCR).

In Step 1380, a decision is made on whether the focusing correction amount (AFCR) is 0. If NO, the absolute value of AFCR is made dP in Step 1390.

In Step 1400, a decision is made on whether AFCR is positive. If NO, a subroutine (Fig. 10) for driving the focusing lens group towards the Near end is executed in Step 1410, whereas if YES, a subroutine (Fig. 11) for driving the focusing lens group towards the Far end is executed in Step 1420.

In Step 1430, further, a decision is made on whether the driving by dP has terminated. If NO, a decision is made in Step 1440 whether the pulse of the AF pulser 68 is output at intervals exceeding 100 msec and whether the focusing lens group has reached the end point.

If YES, an AF end-point processing subroutine (Fig. 12) is executed in Step 1450 and Step 1470 follows. If NO, the flow returns to Step 1430 and keeps cycling through Steps 1430, 1440 to wait for the driving by dP to be terminated or for the end point to be detected.

If the decision is YES in Step 1430 on the assumption that the drive quantity of dP has been terminated, an AF drive stop subroutine (Fig. 13) is executed in Step 1460 and Step 1470 follows.

In Step 1470, 1480 following Step 1450, 1460, a decision is made on whether the focusing lens group is located at the Near or the Far end. When the focusing lens group is located at any one of the Near and Far ends, Step 1490 follows. When the focusing lens group is located at the Near or the Far end, the following steps are skipped, and the flow returns.

When judged AFCR = 0 in Step 1380, Steps 1390 - 1480 are skipped and Step 1490 follows.

In Step 1490 following Steps 1480, 1380, a flag representing the permission of releasing is set in Step 1490, and the LCD 12 for displaying the in-focus state is turned on in Step 1500. The flow then returns.

As is obvious from the above description, if the power zoom is driven after the in-focus state is established in Step 43, the correction value corresponding to the focal length of the zooming lens group stored in Step 20, 32 where the power zoom drive check is effected by means of the timer interruption is read from the lens ROM 67 so as to correct the drive amount of the focusing lens group according to the results computed in Step 1410, 1420. When the drive amount is thus corrected, the permission of releasing and the in-focus display are made in Steps in 1490, 1500, respectively.

As a result, a picture out of focus is certainly prevented.

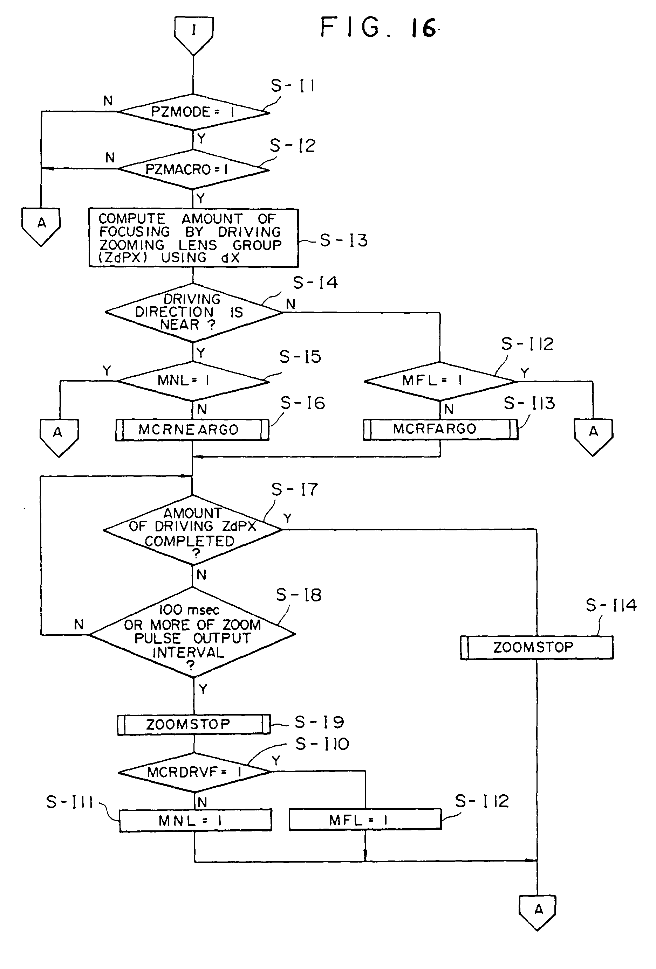

In accordance with the above embodiment, automatic focusing is implemented to establish the in-focus state again even though zooming is performed in the focus-lock state thereafter so as to ensure that a picture out of focus is prevented and to increase freedom of using a zoom lens to determine a composition in the finder because the amount of a defect of focus corresponding to the movement of the zooming lens group is read from the storage means in order to correct the driving of the focusing lens group according to the amount of its defect. In the following, the subroutines B, I, M, and K of Fig. 5 are described with reference to Figs. 16 to 19.

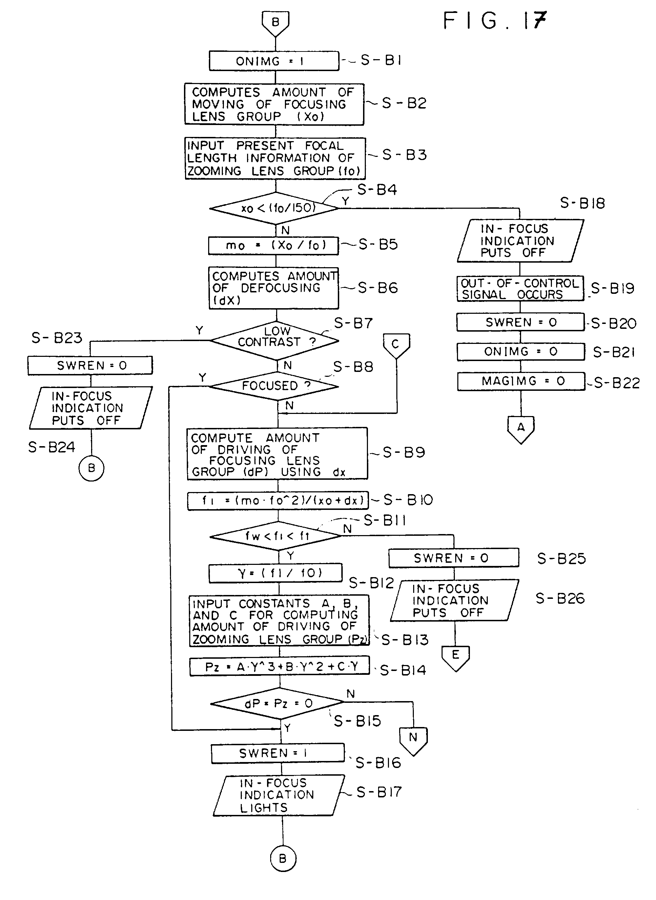

In S-B1 shown in Fig. 17 the process sets the flag ONIMG to 1 for representing whether the image magnification constant control operation takes place (control state). The process advances to S-B2. The process computes the amount of advancing of the focusing lens group from the infinite terminus x₀ and then advances to S-B3. The process inputs the present focal length information of the zooming lens group f₀ in S-B3 and then advances to S-B4. The process determines whether the amount of advancing x₀ is smaller then f₀/150 or not. In this determination, whether the amount of advancing x₀ is smaller than f₀/150 or not means whether the image magnification is too small to be controlled or riot. When the image magnification is too small, a change of the image magnification caused by moving of the subject cannot be precisely detected. Thus, in this case, when the determined condition is YES, the process advances to S-B18 so as to turn off the in-focus indication. In S-B19 the process generates an out-of-control signal to inform the operator that the image magnification constant control operation is disabled. In S-B20 the process sets the flag SWREN for representing whether the release operation is permitted or not to 0. In S-B21 the process sets the flag ONIMG for representing whether the image magnification constant control operation takes place or not to 0 (non-control state). The process sets the flag MAGIMG for representing whether to start the image magnification constant operation or not to 0 in S-B22 and then advances to S37 shown in Fig. 5.

When the process determines in S-B4 that the image magnification is not too small, the determined condition is NO and the process advances to S-B5. The process computes m₀ = x₀/f₀ and then advances to S-B6. The process computes the amount dx of defocusing in S-B6 and then advances to S-B7. The process determines in S-B7 whether the contrast of the subject is low or not. When the determined condition is YES (low contrast), the process advances to S-B23. Here the process sets the flag SWREN for representing whether the release operation is permitted or not to 0. The process turns off the in-focus indication in S-B24. The process advances to S-B1 shown in Fig. 17 so as to enter a loop until the contrast become high. For improving the operability, this operation allows the image magnification constant control operation to continue when the subject is returned to a predetermined position on the screen even if it is lost from the screen or it is moved in a horizontal direction and the contrast decreases.

When the determined condition is NO, the process advances to S-B8 so as to determine whether the subject is being focused or not. When the determined condition is YES (focused), since the contrast is high and the subject does not move from the former position, the process advances to S-B16. The process sets the flag SWREN for representing whether the release operation is permitted or not to 1 (release permission). The process advances to S-B17 so as to turn on the in-focus indication and returns back to S-B1 so as to enter a loop. When the determined condition is NO (not focused) in S-B8, since the lens should be moved, the process advances to S-B9. The process computes the amount dp of driving of the focusing lens group using the amount dp of defocusing in S-B9 and then advances to S-B10.

The process computes a focal length of the focusing lens group of which the amount dx of defocusing occurs using the equation (7) in S-B10 and then advances to S-B11. In this step, the focal length f of the equation (7) is assumed to be f1. Assuming that the focal length at the wide terminus of the focusing lens group is fW and that at the TL terminus is ft, to perform the image magnification constant control operation, fW < f1 < ft is to be met. The process determines that in S-B11. When f1 is not in the range, the determined condition is NO and the process advances to S-25, where the process sets the flag SWREN for representing whether the release operation is permitted or not to 0. The process turns off the in-focus indication in S-B26 and then advances to C shown in Fig. 17. The process C waits until f1 is in the range of fW < f1 < ft.

When fl is in the range of fW < f1 < ft in S-B11, the determined condition is YES and the process advances to S-B12. The process computes the control image magnification r = f1/f₀ and then advances to S-B13. The process inputs constants A, B, and C for computing the amount of driving of the zooming lens group Pz from the lens RoM 43 to the lens CPU 44 or main CPU 6 and then advances to S-B14. The process computes the amount of driving Pz of the equation (11) using the constants A, B, and C in S-B14 and advances to S-B15. The process determines in S-B15 whether dp and Pz are 0 or not. When both of them are 0, the determined condition is N0, and the process advances to N for correction. When both of them are 0, the determined condition is YES and the process advances to S-B16 so as to set the flag SWREN for representing whether the release operation is permitted or not to 1 (release permission). The process advances to S-B17 so as to turn on the in-focus indication and then returns back to S-B1 so as to enter a loop.

When the process advances to I shown in Fig. 16 a determination is made in S-I1 whether the PZMODE flag (for representing whether the zooming lens group can be driven by the power zoom mechanism) has been set to 1. When the determined condition is negative, processing returns back to step S37 shown in Fig. 5, until the determined condition becomes positive. When the determined condition is positive, processing advances to step S-I2, so as to determine whether the macro switch has been turned ON and the PZMACRO flag (for representing whether the zooming lens group is positioned in the macro area by the power zoom mechanism) has been set to 1. When the determined condition is negative, processing returns back to step S37 shown in Fig. 5, so as to enter a loop. When the determined condition is positive processing advances to step S-I3, so as to compute the amount of defocusing by driving the zooming lens group (zdpx) using the amount dx of defocusing described above. In step S-I4 it is determined whether the focusing direction of the zooming lens group is far or near. When it is determined that the lens is in the near direction, processing advances to step S-I5. When it is determined that the lens is in the far direction, processing advances to step S-I12.

Step S-I5 determines whether the MNL flag (for representing whether the near terminus of the focusing lens group is being detected by driving the zoom ring in the macro area) has been set to 1. When the determined condition is positive, processing returns back to step S37 shown in Fig. 5, so as to enter a loop. When the determined condition is negative, processing advances to step S-I6 so as to call a MCRNEARGO subroutine.

Step S-I12 determines whether the MFL flag (for representing whether the far terminus of the focusing lens group is being detected by driving the zoom ring in the macro area) has been set to 1. When the determined condition is positive, processing returns back to step S37 shown in Fig. 5, so as to enter a loop. When the determined condition is negative, the processing advances to Step S-I13 so as to execute MCRFARGO subroutine.

The MCRNEARGO subroutine (called in step S-I6) drives the zooming lens group in the near direction.

The MCRFARGO subroutine called in step S-I13 drives the zooming lens group in the far direction.

The MCRNEARGO subroutine activates the PZ motor M2, so as to drive the zooming lens group in the near direction. Then, the MCRDRVF flag (for representing whether the zooming lens group is being driven in the far direction in the macro area) is set to 0 (i.e., near direction), The PZMGO flag (for representing whether the zooming lens group is being driven by the PZ motor M2 in the macro area) is set to 1 (i.e., drive state) and the TL flag (for representing whether the tele terminus of the zooming lens group is being detected) is set to 0. The WL flag (for representing whether the wide terminus of the zooming lens group is being detected) is set to 0. The MNL flag (for representing whether the near terminus of the focusing lens group is being detected by driving the zoom ring in the macro area) and the MFL flag (for representing whether the far terminus of the focusing lens group is being detected by driving the zoom ring in the macro area) are set to 0. After that, processing advances to step S-I7, shown in Fig. 16.

In the MCRFARGO subroutine, the PZ motor M2 is activated so as to drive the zooming lens group in the far terminus. Thereafter, the MCRDRVF flag (for representing whether the zooming lens group is being driven in the far direction in the macro area) is set to 1 (i.e., far direction), and the PZMGO flag (for representing whether the zooming lens group is being driven by the PZ motor M2 in the macro area) is set to 1 (i.e., drive state). Then, the TL flag (for representing whether the tele terminus of the zooming lens group is being detected), the WL flag (for representing whether the wide terminus of the zooming lens group is being detected), the MNL flag (for representing whether the near terminus of the focusing lens group is being detected by driving the zoom ring in the macro area) and the MFL flag (for representing whether the far terminus of the focusing lens group is being detected by driving the zoom ring in the macro area) are set to 0. After that, processing advances to S-I7, shown in Fig. 16. When the zooming lens group is being driven, driving pulses are outputted from the PZ pulser 49 to the lens CPU 44.

In step S-I7, it is determined whether the zooming lens group has been driven for the amount of focusing (zdpx) obtained in step S-I3. When the zooming lens group has been driven for an amount zdpx, processing advances to step S-I14 so as to execute a ZOOMSTOP subroutine before returning back to step S37 shown in Fig. 5. When the determined condition is negative, processing advances to step S-I8.

In step S-I8, it is determined whether the driving pulses are being outputted from the PZ pulser 49. This determination is made by detecting whether the pulse interval is 100 msec or more or less than 100 msec. When the determined condition indicates a pulse interval of less than 100 msec, processing enters a loop until the determined condition indicates a pulse a interval at 100 msec or more. When the pulse interval equals or exceeds 100 msec, the zooming lens group is driven and stopped at the far terminus or near terminus by executing the ZOOMSTOP subroutine called in either step S-I14 or S-I9. At this time, the friction type clutch, which links the PZ motor M2 and the zooming lens group, slips. Thus, when the pulse interval equals or exceeds 100 msec, the determined condition is positive (100 msec or more), and processing advances to step S-I9 so as to perform ZOOMSTOP subroutine. After that, processing advances to S-I10 so as to determine whether the driven direction was near or far. When the determined condition is negative (i.e., near direction), processing advances to step S-I11, so as to set the MNL flag (for representing whether the near terminus of the focusing lens group is being detected by driving the zoom ring in the macro area) to 1 before returning back to step S.37 shown in Fig. 5. When the determined condition is positive (i.e., far direction), processing advances to step S-I15 so as to set the MFL flag (for representing whether the far terminus of the focusing lens group is being detected by driving the zoom ring in the macro area) is set to 1 before returning back to step S 37 shown in Fig. 5.

When the focusing lens group is driven in the far direction, the process sets the AFDRVF flag (for representing whether the focusing lens group is being driven in the far direction) to 1 (i.e., far direction). Then, the AFCO flag (for representing whether the focusing lens group is being driven) is set to 1 (i.e., drive state) and the NL flag (for representing whether the near terminus of the focusing lens group is being detected) and FL flag (representing whether the far terminus of the focusing lens group is being detected) are set to 0.

When the driving direction of the focusing lens group is near rather than far, the AFDRVF flag (for representing whether the focusing lens group is being driven in the far direction) is set to 0 (i.e., near direction). The AFCO flag (for representing whether the focusing lens group is being driven) is set to 1. The NL flag (for representing whether the near terminus of the focusing lens group is being detected) and the FL flag (for representing whether the far terminus of the focusing lens group is being detected) are set to 0.

It is determined whether the focusing lens group has been driven for the amount of defocusing dp obtained. When the focusing lens group has been driven for an amount equal to dp, processing advances to execute an AF drive stop subroutine so as to stop the focusing lens group, before returning back. When the focusing lens group has not been driven by an amount equal to dp, processing advances to determine whether the interval of the driving pulses which are outputted from the AF pulser is at least 100 msec When the test indicates the pulse interval is less than 100 msec processing enters a loop. When the pulse interval exceeds 100 msec, processing stops driving the focusing lens group. At this time, the friction type clutch, which links the AF motor M1 and the focusing lens group, slips. Thus, when the pulse interval exceeds 100 msec, processing advances so as to execute the AF terminus point subroutine.

### AS Terminus Point Subroutine

The process computes the number of pulses being driven until the focusing lens group is stopped, dpx, using an output from the AF pulser. The process determines whether the driving direction of the focusing lens group is far or not. When the driving direction is far, the determined condition is YES. When the driving direction is near, the determined condition is NO.

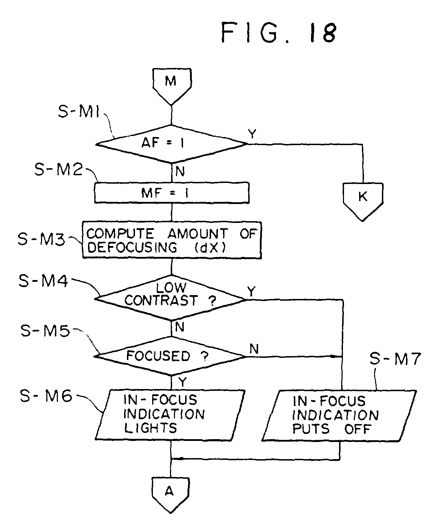

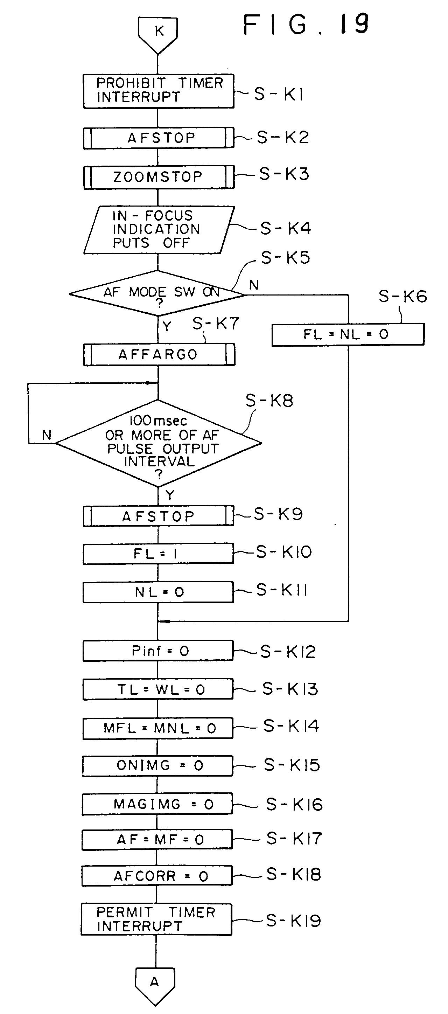

Step 37 in Fig. 5 determines whether the AF mode switch (switch SWAF A/M) has been turned ON and the AF operation (AF = 1) takes place in step S-M1, shown in Fig. 18. When the AF equal 1 (i.e., AF operation takes place), processing advances to step S-K1, shown in Fig. 19. When the AF does not equal 1, the program sets the MF flag (for representing whether the manual focus state takes place) to 1 (in step S-M2), and advances to step S-M3 so as to compute the amount of defocusing of the focusing lens group dx.

Afterwords, a determination whether the contrast is low (step S-M4). When the contrast is low, processing advances to step S-M7 so as to turn off the in-focus indication. When the contrast is not low, processing advances to determine whether the focused. If the image is not focused, processing advances to step S-M7, so as to turn off the in-focus indication. When the image is focused, processing advances to step S-M6 to turn on the in-focus indication, before returning back to step S37 shown in Fig. 5-, to determine whether the AF mode switch (switch SWAF A/M) has been turned ON (input). When the manual mode takes place, processing enters into a loop between step S-M1, shown in Fig. 18 and step S37 shown in Fig. 5 until the AF mode switch is turned ON.

When AF = 1 (i.e., AF operation state) in step S-M1 shown in Fig. 18, processing advances to step S-K1 shown in Fig. 19 This step prohibits the timer interrupt before advancing to step S-K2 to execute an AFSTOP subroutine. The AFSTOP subroutine determines whether the focusing lens group is being driven (AFGO = 1).

When the lens group is not being driven, processing advances to step S-K3, which calls a ZOOMSTOP subroutine, shown in Fig. 19. When AFGO = 1, the AF motor M1 is stopped so as to stop driving the focusing lens group. Processing the advances to step S-K3, after the AFGO flag (for representing whether the focusing lens group is being driven) is set to 0 to call the ZOOMSTOP subroutine in Fig. 19.

The ZOOMSTOP determines whether the zooming lens group is being driven (PZGO = 1).

When PZGO is not equal to 1, the process determines whether the AF drive (autofocus drive) operation is being conducted by the power zoom mechanism (PZ mechanism) in the macro area. When the AF drive operation is not being conducted by the PZ mechanism (i.e.,PZMGO = 0), processing returns to step S-K4, shown in Fig. 19. When the zooming lens group is being driven (i.e., PZGO = 1) or AF drive operation is being conducted (i.e., PZMGO = 1) , processing advances to stop the PZ motor M2 so as to stop driving the zooming lens group. Thereafter, the PZGO flag (for representing whether the zooming lens group is being driven) and the PZMGO flag are each set to 0, before the processing advances to step S-K4, shown in Fig. 19.

This step turns off the in-focus indication and then advances to step S-K5, so as to determine whether the AF mode switch (switch SWAF A/M) has been turned ON. If the AF mode switch is OFF, processing advances to step S-K6. If the AF mode switch is ON, the processing advances to step S-K7 to call an AFFARGO subroutine.

If step S-K6 is performed, the FL flag (for representing whether the far terminus of the focusing lens group is being detected) and the NL flag (for representing whether the near terminus of the focusing lens group is being detected) are each set to 0. Processing then advances to step S-K12.

When step S-K7 is performed, the AFFARGO subroutine. is performed. In the same manner as described above, the process drives the focusing lens group in the far direction, sets the AFDRVF, AFGO, NL, and FL flag to 0 and then advances to step S-K8 shown in Fig. 19. When the focusing lens group is being driven in the far direction, driving pulses are output from the AF pulser 48 to the lens CPU 44. The software program determines in step S-K8 whether the driving pulses are being output from the AF pulser 48. This determination is made by detecting whether a pulse interval of at least 100 msec occurs. When the pulse interval is less than 100 msec, the software program enters a loop, until a pulse interval of at least 100 msec is detected. When the pulse interval exceeds 100 msec, the focusing lens is driven and stopped at the far terminus. At this time, the friction type clutch linked with the focusing lens slips. Thus, when the pulse interval exceeds 100 msec, processing advances to step S-K9 so as to execute the AFSTOP subroutine. This subroutine determines whether the focusing lens group is being driven (i.e., AFGO = 1). When the lens group is not driven, AFGO =0 and processing advances to the ZOOMSTOP subroutine, shown at S-K3 in Fig. 19. When AFGO = 1 the AF motor M1 is stoppped so as to stop the driving of the focusing lens group. Then the AFGO flag (for representing whether the focusing lens group is being driven) is set to 0 before advancing to step S-K10. The FL flag (for representing whether the far terminus of the focusing lens group is being detected) is set to 1. Since the focusing lens group is not positioned at the near terminus, processing advances to step S-K11 so as to set the NL flag (for representing whether the near terminus of the focusing lens group is being detected) to 0.

Since the focusing lens group is positioned at the far terminus, the number Pinf of driving pulses from the far terminus for the focusing lens group is set to 0 in S-K12 Thereafter, the WL flag (for representing whether the wide terminus of the zooming lens group is being detected) and the TL flag (for representing whether the tele terminus of the zooming lens group is being detected) are set to 0 in S-K13. The MFL flag (for representing whether the far terminus of the focusing lens group is being detected by driving the zoom ring in the macro area) and the MNL flag (for representing whether the near terminus of the focusing lens group is being detected by driving the zoom ring in the macro area) are set to 0 in S-K14. The ONIMG flag (for representing whether the image magnification constant control operation takes place), the MAGIMG flag (for representing whether to start the image magnification constant operation), the MF flag (for representing whether the manual focus state takes place), the AF flag (for representing whether the autofocus state takes place), and the AFCORR flag (for representing whether to compensate the focus position of the lens) are set to 0 in steps S-K13 to S-K18, the timer is permitted to be interruptted in step S-K19, and then the software program returns back to step S37 shown in Fig. 5.

## Claims

1. An autofocus device for a camera comprising:
a photographing lens (L) having a focusing lens group and a zooming lens group;
focus drive means (60,63) arranged to drive said focusing lens group for focusing;
zoom drive means (61,64) arranged to drive said zooming lens group for zooming;
memory means (67) containing information inherent to said photographing lens (L);
defocus information detection means (17,18) for obtaining defocus information;
focus lock means for disabling said focus drive means (60,63);
zoom switch means for controlling said zoom drive means for zooming;
characterised by said information including correction data expressing a deviation from the expected focus for some focal lengths of said photographing lens (L) with respect to one standard focal length; by
storing means for storing information (PSRTR, PEND) concerning the focal length (PZSTRTF, PZENDF) of said photographing lens (L); and by
focus correcting means being arranged to control said focus drive means (60,63) to bring said focusing lens group into in-focus position on the basis of the defocus information from said defocus information detection means (17,18), to control said focus lock means to disable movement of said focus drive means, and to store the focal length (PZSTRTF) of the photographing lens (L) in said storing means, said focus correcting means furthermore being arranged to calculate a correction drive amount (AFCR) of said focusing lens group on the basis of the difference between the correction data (PSRTR) corresponding to the focal length stored in said storing means and the correction data (PEND) corresponding to the focal length of said photographing lens (L) when it is detected that said zoom driving switch has stopped controlling said zoom drive means (61,64), followed by controlling said focus lock means to enable driving of said focus drive means (60,63) and controlling said focus drive means (60,63) to drive said focusing lens group to a position corrected by said calculated correction drive amount (AFCR).

2. The autofocusing device according to claim 1, wherein said focus-drive means (60, 63) comprises a pulse motor (60); and wherein said focus correction amount (AFCR) comprises the number of pulses (dP), by which said pulse motor (60) is operated.

3. The autofocusing device according to anyone of the foregoing claims, wherein said zoom-drive means (61, 64) comprises a pulse motor (61).

## Patentansprüche

1. Autofokus-Vorrichtung für eine Kamera, umfassend:
ein fotografisches Objektiv (L) mit einer Fokussierlinsengruppe und einer Vario-Linsengruppe;
Fokussierantriebsmittel (60, 63) zum Antrieb der Fokussierlinsengruppe zur Scharfeinstellung;
Varioantriebsmittel (61, 64) zum Antrieb der Vario-Linsengruppe zur Brennweitenänderung;
Speichermittel (67), die für das fotografische Objektiv (L) spezifische Informationen enthalten;
Erfassungsmittel (17, 18) für Defokusinformationen;
Fokussier-Sperrmittel zum Sperren der Fokussierantriebsmittel (60, 63);
Vario-Schaltermittel zum Steuern der Varioantriebsmittel zur Brennweitenänderung;
**gekennzeichnet** durch in den Informationen enthaltene Korrekturdaten, welche eine Abweichung von der zu erwartenden Scharfeinstellung für einige Brennweiten des fotografischen Objektivs (L) gegenüber einer Standard-Brennweite enthalten; durch
Speichermittel zum Speichern von Informationen (PSRTR, PEND), die die Brennweite (PZSTRTF, PZENDF) des fotografischen Objektivs (L) betreffen; und durch
Fokuskorrekturmittel, die zum Steuern der Fokussierantriebsmittel (60, 63) geeignet sind, um die Fokussierlinsengruppe in die Scharfeinstellung auf der Basis der Defokusinformationen der Erfassungsmittel (17, 18) zu bringen, um die Fokussier-Sperrmittel zum Sperren der Bewegung der Fokussierantriebsmittel zu steuern, und um die Brennweite (PZSTRTF) des fotografischen Objektivs (L) in den Speichermitteln zu speichern, wobei die Fokuskorrekturmittel ferner geeignet sind, einen Korrekturantriebsbetrag (AFCR) der Fokussierlinsengruppe auf der Basis des Unterschieds zwischen den Korrekturdaten (PSRTR) entsprechend der in den Speichermitteln gespeicherten Brennweite und den Korrekturdaten (PEND) entsprechend der Brennweite des fotografischen Objektivs (L) zu berechnen, wenn erfaßt wird, daß der Varioantriebsschalter die Steuerung der Varioantriebsmittel (61, 64) unterbrochen hat, worauf die Steuerung der Fokussier-Sperrmittel zum Freigeben des Antriebs durch die Fokussierantriebsmittel (60, 63) und die Steuerung der Fokussierantriebsmittel (60, 63) zum Antrieb der Fokussierlinsengruppe in eine Position folgt, die um den berechneten Korrekturantriebsbetrag (AFCR) korrigiert ist.

2. Autofokus-Vorrichtung nach Anspruch 1, bei der die Fokussierantriebsmittel (60, 63) einen Impulsmotor (60) enthalten und der Fokuskorrekturbetrag (AFCR) die Anzahl Impulse (dP) enthält, mit denen der Impulsmotor (60) betrieben wird.

3. Autofokus-Vorrichtung nach einem der vorhergehenden Ansprüche, bei der die Varioantriebsmittel (61, 64) einen Impulsmotor (61) enthalten.

## Revendications

1. Dispositif de mise au point automatique pour appareil photo, comprenant :
un objectif de photographie (L) comportant un groupe de lentilles de mise au point et un groupe de lentilles de changement de plan ;
un moyen de déplacement de foyer (60, 63), agencé pour déplacer ledit groupe de lentilles de mise au point pour la mise au point ;
un moyen de déplacement de zoom (61, 64), agencé pour déplacer ledit groupe de lentilles de changement de plan pour le changement de plan ;
un moyen de mémorisation (67) contenant de l'information propre audit objectif de photographie (L) ;
un moyen de détection d'information de défocalisation (17, 18) pour obtenir l'information de défocalisation ;
un moyen de verrouillage de mise au point pour désactiver ledit moyen de déplacement de foyer (60, 63) ;
un moyen interrupteur de zoom pour commander ledit moyen de déplacement de zoom pour changer de plan ;
caractérisé :
en ce que ladite information comprend une donnée de correction exprimant un écart par rapport au foyer prévu pour certaines distances focales dudit objectif de photographie (L) en fonction d'une distance focale standard ;
par un moyen de mémorisation pour mémoriser l'information (PSRTR, PEND) concernant la distance focale (PZSTRTF, PZENDF) dudit objectif de photographie (L) ; et
par un moyen de correction de foyer qui est agencé pour commander ledit moyen de déplacement de foyer (60, 63) pour amener ledit groupe de lentilles de mise au point dans la position au point sur la base de l'information de défocalisation issue dudit moyen de détection d'information de défocalisation (17, 18), pour commander ledit moyen de verrouillage de foyer pour arrêter le mouvement dudit moyen de déplacement de foyer, et pour mémoriser la distance focale (PZSTRTF) de l'objectif de photographie (L) dans ledit moyen de mémorisation, ledit moyen de correction de mise au point étant, de plus, agencé pour calculer une valeur de déplacement de correction (AFCR) dudit groupe de lentilles de mise au point, sur la base de la différence entre les données de correction (PSRTR) correspondant à la distance focale mémorisée dans ledit moyen de mémorisation et de la donnée de correction (PEND) correspondant à la distance focale dudit objectif de photographie (L), lorsque l'on détecte que ledit interrupteur de déplacement de zoom a cessé de commander ledit moyen de déplacement de zoom (61, 64), suivi par la commande dudit moyen de verrouillage de mise au point pour permettre le déplacement dudit moyen de déplacement de foyer (60, 63) et pour commander ledit moyen de déplacement de foyer (60, 63) pour amener ledit groupe de lentilles de mise au point dans une position corrigée de ladite valeur de déplacement de correction (AFCR) calculée.

2. Dispositif de mise au point automatique selon la revendication 1, dans lequel ledit moyen de déplacement de foyer (60, 63) comprend un moteur à impulsions (60) ; et dans lequel ladite valeur de correction de mise au point (AFCR) comprend le nombre d'impulsions (dP) qui met en oeuvre ledit moteur à impulsions (60).

3. Dispositif de mise au point automatique selon l'une quelconque des revendications précédentes, dans lequel ledit moyen de déplacement de zoom (61, 64) comprend un moteur à impulsions (61).
